# EUROPEAN PATENT APPLICATION

(11) **EP 1 433 510 A1**
(43) Date of publication of application: **30.06.2004**
(21) Application number: 03029297.3
(22) Date of filing: 22.12.2003
(51) Int. Cl.: B01D 19/02, B01D 21/00, C01C 1/08, B01J 7/02, B01J 8/20

(54) **Apparatus for removing contaminants in reactors**

(30) Priority: 23.12.2002 US 328411
(71) Applicant: THE CHEMITHON CORPORATION, Seattle Washington 98106-1598 (US)
(72) Inventor: MacArthur, Brian W., Redmond, Washington 98053 (US); Burton, Brooks, Bellevue, Washington 98004 (US); Jessup, Walter A, Seattle, Washington 98146 (US)
(74) Representative: Rupp, Christian, Dipl.Phys.

(57) **Abstract**

The present invention relates to an urea hydrolysis reactor (10) with a heater (12) submerged in the liquid phase (14) of the reaction mixture. Aqueous urea (18) is fed to the reactor (10), and a pressurized gas phase stream (20) that includes ammonia, carbon dioxide, and water is drawn off at the top of the reactor (10), controlled by a valve (22) and monitored by a pressure sensor (24). In this embodiment, adapted to remove a contaminant that tends to concentrate at a top layer (28) of the liquid phase (14) of the reaction mixture as shown, at least a portion of the top layer (28) is decanted through a pipe (30) and fed to a separation means (32). The separation means (32) preferably is a physical separation means, for example including one or more of a vessel, a strainer, a (25) filter, a centrifuge, and the like. In this embodiment, a contaminant is discarded through pipe (34), a stream of recovered reactants and/or catalyst is recycled via a pump (38) on a pipe (40) to combine with the aqueous urea feed (18) to the reactor (10), and a gas phase fraction is recycled via a pipe (42) back to the reactor, preferably to gas phase region (44). Optionally, but preferably, the reactor (10) includes a temperature sensor (48) and a level meter (50).

## Description

### BACKGROUND

### Field of the invention

The invention relates generally to systems for controlling the presence of contaminants in chemical reaction systems and, more particularly, the invention relates to methods and apparatus for removing contaminants found in urea hydrolysis reactors and others wherein contaminants are formed and/or accumulated in the course of an ongoing reaction.

### Brief Description of Related Technology

Solid urea is available in several commodity grades destined for uses either in agricultural applications as fertilizers or in chemical process for production of urea-formaldehyde resins and thermosetting polymers. Solid urea is available in bags or bulk quantities, and is commonly transported in bulk truck or railcar loads. Urea is also available as bulk solutions transported in bulk truck loads. Urea is a non-hazardous material, and affords a safe starting material in certain process requiring gaseous ammonia as, for example, in processes for removal of nitrogen oxides from the tail gas stream of combustion processes, such as in fuel-fired boiler operations in public electric power generation plants. Such processes use gaseous ammonia in Selective Catalytic Reduction (SCR) or Selective Non-Catalytic Reduction (SNCR) methods for removal of nitrogen oxides. Another example is the use of gaseous ammonia to treat fly ash in the tail gas system of a fuel-fired boiler in a public electric power generation plant. Such treatment is beneficial for collection of the fly ash. Common alternatives to use of urea include use of anhydrous ammonia or of aqueous ammonia, both of which are hazardous chemicals presenting serious risks in the transport, handling, storage, and use with attendant regulatory compliance requirements.

Urea may be hydrolyzed to form gaseous ammonia for such uses. Such processes typically employ solid urea supplied in bulk quantities, and of a composition readily available as a commodity. Hydrolysis processes may also employ an aqueous urea feed solution purchased from a commercial supplier. The aqueous urea solution might be commonly in the concentration range of 40 wt.% to 50 wt.% or at a higher concentration prepared to fill a special order. Such aqueous solutions are typically prepared by dissolving solid urea, though other commercial means may be possible.

Solid urea is a relatively soft solid that is hygroscopic, which may cause problems in handling it in a highly pure form. Therefore, it is a common practice in the industry to add certain chemical compounds to the solid urea to improve its physical properties and to improve handling characteristics of a granulated or prilled urea product. Such additives include but are not limited to those disclosed in Belasco et al. U.S. Patent No. 3,248,255 (gaseous formaldehyde to form urea-formaldehyde resin surface coating), Van Hijfte et al. U.S. Patent No. 4,160,782 (dimethylolurea and/or trimethylolurea), Elstrom et al. U.S. Patent No. 4,204,053 (formaldehyde), Blouin U.S. Patent No. 4,587,358 (lignosulfonates), Gallant et al. U.S. Patent No. 5,102,440 (urea-formaldehyde compounds), and Kayaert et al. U.S. Patent No. 5,653,781 (formaldehyde, methylolureum (methylolurea), urea-formaldehyde pre-condensates, or hexamethylenetetramine), the disclosures of which are incorporated herein by reference.

Such additives are typically present in the solid urea in concentrations up to 2 wt. %. Therefore, during the continuous use of such solid urea in a hydrolysis reactor designed to produce gaseous ammonia, the solid urea is first dissolved into an aqueous solution, commonly in the concentration range 20 wt. % to 78 wt. %, preferably in the range 40 wt. % to 60 wt. %, and while the urea is continuously decomposed to ammonia and carbon dioxide and leaves the reactor in a gaseous form, the additives present in the solid urea accumulate and may undergo various chemical reactions that form, along with unreacted additives, a contaminant mass in the reaction mixture.

Several specific process systems have been described and patented with the intent to generate a gaseous stream of ammonia, carbon dioxide, and water vapor at a temperature and pressure useful for removal of nitrogen oxides or treatment of fly ash as described, or for other process applications. Young (U.S. Patent No. 5,252,308) describes a process system that performs the hydrolysis reaction using aqueous solutions of urea in the presence of catalyst systems, specifically mixtures of ammonium salts of certain polyprotic mineral acids, such as phosphoric or sulfuric acid. Cooper et al. (U.S. Patent No. 6,077,491) describe a urea hydrolysis process that does not require a catalyst and that may take a variety of forms in the apparatus. Lagana (U.S. Patent No. 5,985,224) describes a process that employs steam-stripping in the hydrolysis reactor to promote the reaction. The disclosures of Young (U.S. Patent No. 5,252,308), Cooper et al. (U.S. Patent No. 6,077,491) and Lagana (U.S. Patent No. 5,985,224) are incorporated herein by reference.

These processes do not recognize the potential problems that may arise from the accumulation of a contaminant mass in the reactor, nor do they describe why such a contaminant may arise, nor do they provide means to address this contaminant. Disclosed herein are some of the reasons why contaminants arise in the reactor vessels of the various process systems, and various means to address these contaminants so that maintenance-free urea hydrolysis operation can be achieved, or at least the maintenance-free period of operation extended and contaminants removed, without the hazards and inconvenience of shutting a system down and opening a reactor vessel for frequent cleaning.

### SUMMARY

It is an objective of the invention to provide technology for maintaining the operation of a reactor by incorporating means to isolate and/or remove soluble and/or insoluble contaminant matter, either intermittently or continuously, from the reaction system.

One aspect of the invention is an apparatus for carrying out a chemical reaction, the apparatus including a reactor vessel including a gas phase outlet conduit and a primary reservoir containing a condensed phase reaction mixture, the reaction mixture including a contaminant formed and/or accumulated during the course of a reaction; a secondary reservoir in fluid communication with reaction mixture in the primary reservoir; and a recycle path between the primary reservoir and the secondary reservoir.

While the invention will be described with reference to the exemplary urea hydrolysis reaction system, the invention is applicable generally to reaction systems that produce or accumulate soluble and insoluble contaminants during the course of the reaction.

Further aspects and advantages may become apparent to those skilled in the art from a review of the following detailed description, taken in conjunction with the appended claims. While the invention is susceptible of embodiments in various forms, described hereinafter are specific embodiments with the understanding that the disclosure is illustrative, and is not intended to limit the invention to the specific embodiments described herein.

### BRIEF DESCRIPTION OF THE DRAWINGS

Figure 1 illustrates the molecular structure of methylene di-urea.
Figure 2 illustrates the molecular structure of a urea-formaldehyde resin.
Figure 3 illustrates the molecular structure of a potential polyamide contaminant
Figure 4 illustrates a urea hydrolysis process system with which the methods and apparatus of the invention are useful.
Figure 5 illustrates an embodiment of a system for removing insoluble contaminant material from a urea hydrolysis reactor according to the invention.
Figure 6 illustrates an embodiment of a system for removing insoluble contaminant material from a urea hydrolysis reactor according to the invention.
Figure 7 illustrates an embodiment of a system for removing soluble and insoluble contaminant materials from a urea hydrolysis reactor according to the invention.
Figure 8 illustrates an embodiment of a system for removing soluble and insoluble contaminant materials from a urea hydrolysis reactor according to the invention.
Figure 9 illustrates an embodiment of a system for removing soluble and insoluble contaminant materials from a urea hydrolysis reactor that contains a dissolved or solid dispersed catalyst according to the invention.
Figure 10 illustrates an embodiment of a system for removing soluble and insoluble contaminant materials from a urea hydrolysis reactor that contains a dissolved or solid dispersed catalyst according to the invention.
Figure 11 illustrates an embodiment of apparatus for removing contaminant materials that employs a decanter vessel and one or more strainers to effect separation of contaminants.
Figure 12 illustrates an embodiment of apparatus for removing contaminant materials that employs primary and secondary reactors, a transfer vessel, and one or more strainers to effect separation of contaminants.
Figure 13 illustrates a urea hydrolysis system using a reboiler style reactor vessel with weirs and a strainer to effect separation of contaminants.

### DETAILED DESCRIPTION

Generally, a contaminant is any undesirable substance present in a reactor. Put another way, a contaminant is any substance present in a reactor that impairs the short-term or long-term operation of the reactor. A contaminant can be defined as any substance present in a reactor that is not a reagent, reactant, intermediate, product, solvent, carrier, substrate, indicator, or catalyst of a desired reaction in the reactor, or a mechanical component of the reactor itself. A contaminant can be introduced into the reactor directly (*e.g.*, mixed with a reagent) or indirectly (*e.g.*, formed by reaction with another contaminant or non-contaminant or formed by thermal decomposition).

One aspect of the disclosure is a method of controlling the amount of such contaminants in a condensed phase (*e.g.*, liquid or liquid with solid) reaction mixture in a reaction vessel that includes the steps of withdrawing a portion of the reaction mixture containing such soluble and/or insoluble contaminants from the liquid phase and the reaction vessel, separating at least one contaminant from the remainder of the withdrawn portion of the reaction mixture, and recycling at least a portion of the withdrawn reaction mixture to the liquid phase in the reactor vessel.

Another aspect of the disclosure is a method of controlling the amount of such contaminants in a liquid phase reaction mixture in a reaction vessel that includes the steps of withdrawing a portion of the reaction mixture containing such soluble and/or insoluble contaminants from the liquid phase and the primary reaction vessel, discarding all or a portion of said removed mixture, separating at least one contaminant in any remaining portion of the removed mixture from the final remainder of the remaining portion, recycling the final remainder to the liquid phase of the primary reaction vessel, and making up the original volume of the reaction mixture from a source of non-contaminated (*e.g.*, fresh) reactant solution.

The methods and apparatus described herein are particularly useful in various processes for production of ammonia by hydrolysis of urea, whether or not such hydrolysis is conducted with a catalyst present in the urea hydrolysis reaction mixture. According to this embodiment of the invention, in order to extend or indefinitely sustain the continuous operation of the urea hydrolysis process, means to remove the by-product contaminants in the reaction mixture are provided. Without such means, operation of a urea hydrolysis system would be interrupted to enable physical cleaning of the reactor, which is complicated by the presence of ammonia and its associated chemical hazards. Separation of the contaminant matter may be performed intermittently or continuously in accordance with the invention. Various means to enhance separation of contaminants are described.

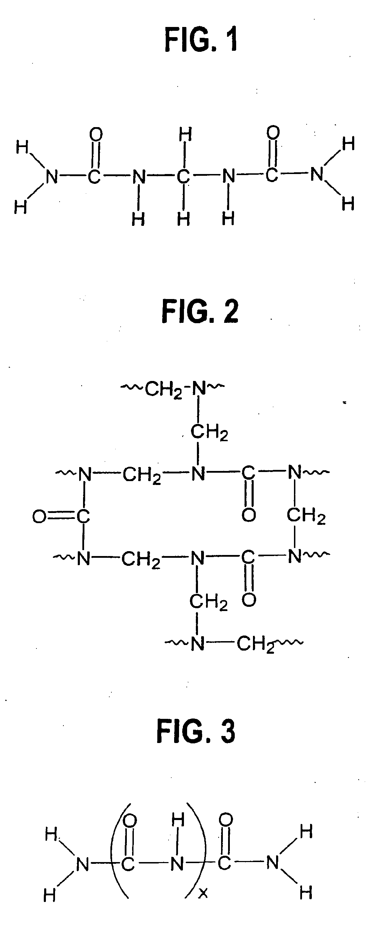

Solid urea is commonly manufactured with certain urea-formaldehyde additives present in concentrations up to 2 wt.%. These compounds are added to enhance the handling characteristics of the urea. The additives reduce the tendency to form fine dust (*e*.*g*., by preventing breakage of granules or prills) and reduce the hygroscopic behavior, which causes particles to form into clumps and cakes. Additives may be urea-formaldehyde oligomers or resins that have been partially polymerized, such as that referred to by manufacturers' grade UF-85. For example, in at least one process, a urea-formaldehyde compound is added to the urea while the urea is in a molten state, and is believed to react with the UF-85 additive to form methylene di-urea (MDU, Figure 1), which imparts the desired physical properties to the final urea composition in the dry solid form.

Another additive is a type of saponate supplied under the trade designation UREASOFT by Kao Corporation. UREASOFT additive is generally applied to the surface of prilled urea just before storage as an aid in product storage and handling.

Preferred conditions in a urea hydrolysis reactor, according to various patented processes, are limited to fairly narrow ranges of temperature and pressure. Thus, in Cooper et al. the reactor preferably operates at about 150 °C to about 155 °C and 75 psig to 90 psig, while in Lagana the reactor preferably operates at 195 °C and 200 psig to 275 psig.

Young describes a process that utilizes a catalyst in the aqueous solution, and states that the reactor temperature must be at least 150 °C, preferably in the range 150 °C to 200 °C. The vapor pressure of pure water in this temperature range is 70 psig to 225 psig and, thus, the generalized range of conditions described in the Cooper et al. and Lagana patents overlaps the operating conditions first described by Young.

Therefore, it can generally be said that such hydrolysis reactors operate preferably in the range from about 150 °C to 195 °C and about 75 psig to 275 psig. All of these processes employ aqueous solutions of urea, which typically fall in the concentration range 50 ± 15 wt. %, commonly about 50 wt. %.

Under these conditions the urea hydrolysis reaction occurs according to the well-known mechanism:

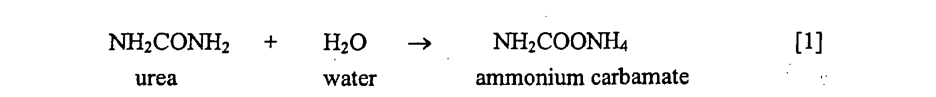

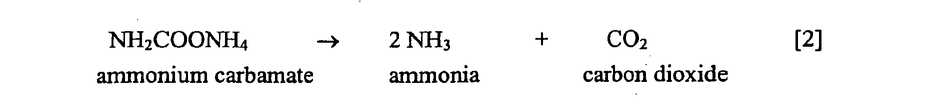

These reactions taken together are endothermic, requiring a constant supply of heat to the hydrolysis reactor to sustain the reaction. The ammonia and carbon dioxide produced are formed as gases, which are released from the aqueous solution of liquid reactants. Bubbles containing ammonia, carbon dioxide and water vapor are released into the liquid by the chemical reaction, and rise in the liquid to eventually coalesce into a bulk gas phase. The reactors therefore have a common tendency to form a foamy cuff layer in which the bubbles of gas gradually break and release trapped gases into a bulk gas phase. The urea is converted to ammonia and carbon dioxide gases, which are discharged from the reactor.

However, the additives present in the urea composition must also be considered. It is illustrative to consider the presence of methylene di-urea, a compound known to be present in solid urea. This compound arises as a consequence of adding UF-85, for example, to the urea as previously described.

Methylene di-urea has a chemical structure shown in Figure 1, and in the urea hydrolysis reactor may combine with a water molecule to release urea and formaldehyde, according to the following reaction:

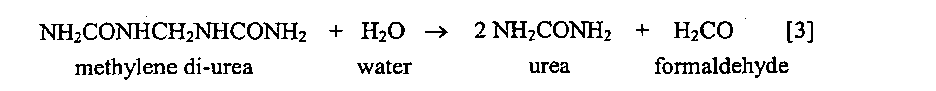

Formaldehyde is a volatile compound and will tend to leave the liquid phase governed by its vapor-liquid equilibrium at the conditions in the system. Sufficient pressure may exist to sustain a significant concentration in the liquid phase, enabling reaction of the dissolved formaldehyde and urea. A possible mechanism for such reaction may follow the mechanism known to form the urea-formaldehyde resins, thus: 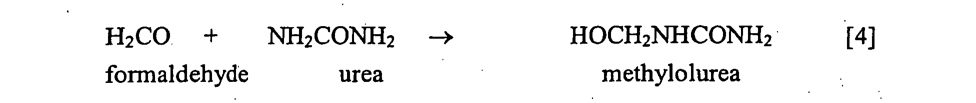 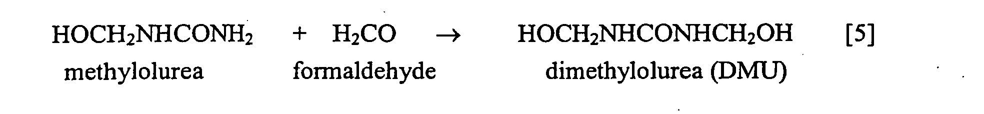 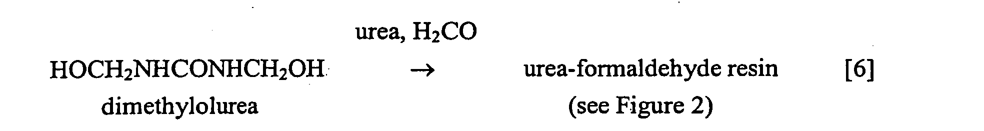 Reactions 4, 5, and 6 illustrate the combination of urea and formaldehyde into large polymeric structures by a familiar reaction mechanism (Morrison and Boyd, Organic Chemistry, 2^{nd} Ed., Allyn and Bacon, Inc., Boston 1966, p. 923).

Oligomers of urea-formaldehyde reaction products may be applied to solid urea by various means to impart desirable handling characteristics, and the urea-formaldehyde oligomers may react to form dimethylolurea or may retain their original structure to one degree or another. Use of such solid urea in the urea hydrolysis process would result in continuous dosing of the reactor solution with oligomers of urea-formaldehyde resin, which could continue to react and to grow in mass according to the reactions 4, 5, and 6.

While such reactions as 4, 5, and 6 are normally carried out with relatively pure reactants in processes intended to produce urea-formaldehyde resins and molded plastics, the mechanism may also explain the appearance of a semi-solid to solid contaminant matter in the urea hydrolysis reactor wherein the urea, formaldehyde and intermediates are all present in the aqueous reactant solution. It is likely that the concentration of the reactants, as well as the temperature, pressure, and pH of the solution have an effect on the reaction rate. However, formation of large oligomers of urea-formaldehyde polymer in the reactor with no means of removal will eventually result in serious contamination and present an impediment to continued operation.

Polymers, such as urea-formaldehyde reaction products, will vary in molecular weight or polymer chain length, and will exhibit water solubility for the smaller oligomers, and relative insolubility as the size of the oligomer molecule increases. Large polymer molecules may therefore separate as a distinct phase in the urea hydrolysis reaction mixture. When the polymer density is less than that of the aqueous solution, the polymer will tend to collect on the surface in the frothy layer where bubbles of gases are coalescing and breaking to release ammonia and carbon dioxide. The compounds may affect the rate of foam-breaking in the reactor, and cause problems in disengaging the product gases from the aqueous reaction mixture. When the polymer density is greater than that of the aqueous solution, the polymer will tend to sink and collect on the bottom of a reactor vessel.

Other additives have been reported, such as saponates (*e.g.*, UREASOFT) and lignosulfonates, which also would be retained in the urea hydrolysis reactor if present in the feed urea. Lignosulfonates are mentioned with reference to urea products destined for use as fertilizers, and may not be as prevalent in urea products for chemical process applications. Nevertheless, both lignosulfonates and saponates will exhibit affinity for the liquid-vapor interface, and may reduce the surface tension of the liquid reaction mixture in this area. The effect would be to enhance the foam stability in the reactor, and as more of the material is accumulated, a contaminant mass may become isolated in a preferred location in the reactor just as in the case described previously. Therefore, a similar means of removal will be required.

Other potential contaminant masses include polyamides, such as polyacrylamides. The following mechanism is proposed.

The proposed route starts with reaction of urea in the aqueous solution to form ammonium carbamate, which in turn partially decomposes to ammonia and carbamic acid. Carbamic acid can react with urea in a condensation polymerization reaction to form the polyamide compounds.

The chemical reactions are as follows: 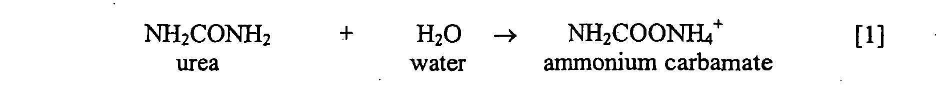 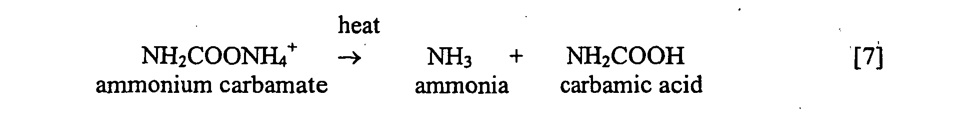 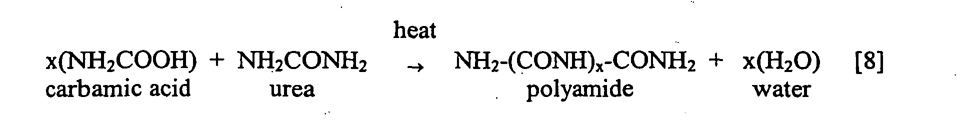 wherein x is a variable integer greater than zero.

The molecular structure of a potential polyamide contaminant is illustrated in Figure 3.

This mechanism illustrates how certain species likely to be present in the urea hydrolysis reactor may combine to form a polyamide compound. In the reaction mixture, the polymerization process can continue to increase the molecular weight of the polyamide compound until it is no longer soluble in the solution and separates into a contaminant phase. An interesting aspect of this type of contaminant is that it may arise even if purified urea were used in the hydrolysis reactor, provided that conditions were favorable to the formation of carbamic acid. Amides are formed by the reaction of carboxylic acids and amines, and therefore other carboxylic acids, if present in the reaction mixture, could potentially undergo a reaction analogous to the mechanism shown above and yield a similar polyamide compound. Accordingly, even though purified (*e.g.*, low-biuret) urea can be used to make aqueous urea solutions that have relatively low concentrations of additives, such solutions may still give rise to a contaminant mass in a urea hydrolysis reactor by one or more of the reactions described.

Other contamination problems may arise from trace compounds present in the process water or the solid urea, which would accumulate under continuous operation over longer periods of time. For example, certain metals may be present in urea in small amounts, such as Fe, Cd, Cr, Pb, As, and Hg, and ash may be present at concentrations in the range 0.001 wt. % to 0.01 wt. %. The process water may contribute calcium hardness and other minerals or solids. Furthermore, the means of transporting, handling and dissolving the solid urea may introduce contaminants from the environment or from contact with the equipment that is used.

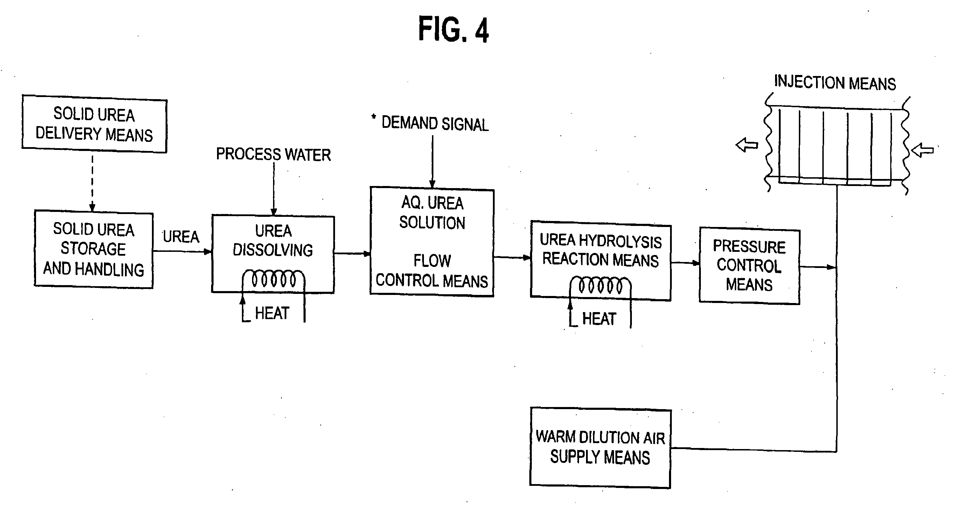

A urea hydrolysis process is illustrated in Figure 4, which shows the major elements of the process system and process controls. The system in a generalized preferred embodiment will include means for delivering solid urea, facilities for storing and handling bulk solid urea, means for dissolving solid urea in process water to produce a solution at a controlled concentration and temperature, means for controlling the flow of aqueous urea to the hydrolysis reactor in response to an external demand signal, a urea hydrolysis reaction means (*e.g.*, a reactor vessel), means for controlling the reactor pressure by controlled discharge of the produced gases, and means for supplying warm dilution air to mix with the produced gases and conveying the said second mixture to an injection manifold and injection probe array. The produced ammonia, carbon dioxide, and water vapor mix into the warm air and the conduit is heated to maintain the temperature at or above about 60 °C to avoid the formation of ammonium carbonate salts. The hydrolysis reactor must be heated to sustain the endothermic reaction, and at the temperature of the reaction the vapor pressure of water requires a design able to sustain pressures in the range 50 psig to 300 psig. In some embodiments, the reactor vessel may have provision for injection of steam to promote stripping of the ammonia from the aqueous solution. In some embodiments a portion of the reactants may be removed from the reactor and recycled back to the urea-dissolving step or just upstream of the aqueous urea flow control means or elsewhere.

Contaminants may arise in the urea hydrolysis reaction mixture from reactions of pure urea, such as the formation and/or accumulation of polymers such as polyamides, or as a consequence of minor ingredients added to the solid urea, which may give rise to formation and/or accumulation of contaminants including saponates, ligno-sulfonates, urea-formaldehyde oligomers, urea-formaldehyde polymers, or other compounds or reaction products derived from such additives in as-supplied solid urea. As a consequence of the density of a contaminant component being different from that of the aqueous solution of reactants, a layer of relatively high concentration of contaminant tends to form on top of the liquid phase in the reactor or sink in the bottom of the reactor vessel. The design of the means for removing this material should take into consideration the design of the reactor vessel, and the capacity of the reactor to restrict the location where the contaminant matter tends to accumulate.

In a fundamental description, the invention provides for the continuous or intermittent removal of a portion of the reaction fluid mixture from the reactor vessel and from a position within said reactor vessel where the solid and semi-solid contaminants tend to form and/or accumulate, so that said contaminants may be efficiently separated and removed from the reaction fluids. The fluids may then be pumped back into the reactor vessel.

One embodiment is an apparatus for carrying out a chemical reaction, including a reactor vessel including a gas phase outlet conduit and a primary reservoir in the reactor vessel containing a condensed phase reaction mixture such that the reaction mixture defines a surface, the reaction mixture including a contaminant formed and/or accumulated during the course of a reaction; a secondary reservoir in fluid communication with the surface of the reaction mixture in the primary reservoir (*i*.*e*., such that reaction mixture at the surface in the primary reservoir is drawn into the secondary reservoir); and a recycle conduit in fluid communication with the primary reservoir and the secondary reservoir. The reaction mixture can form a surface regardless of agitation. Preferably, the secondary reservoir is in fluid communication with the primary reservoir in an area including at least a portion of the surface of the reaction mixture in the primary reservoir. The secondary reservoir can include an independent vessel disposed outside the reactor vessel and can further include a conduit, a first opening of the conduit disposed in fluid communication with the primary reservoir and a second opening of the conduit disposed in fluid communication with the secondary reservoir. In this embodiment, the first opening of the conduit advantageously can be disposed at an area including at least a portion of the surface of the reaction mixture in the primary reservoir, though this need not be the case as long as the secondary reservoir is in fluid communication with the surface of the reaction mixture in the primary reservoir. In such an embodiment, the independent vessel optionally further comprises a gas phase outlet conduit in fluid communication with one or more of the reactor vessel and the reactor vessel gas phase outlet conduit (*e.g.*, such that any gaseous reaction product produced in the independent vessel can be beneficially used).

In one embodiment, described in detail below in connection with the figures, the secondary reservoir is in controllable fluid communication with the primary reservoir (*e.g.*, by a valve) and the apparatus further includes a source of pressurized steam in controllable fluid communication with the secondary reservoir (*e.g.*, by another valve).

In another embodiment, the secondary reservoir is disposed within the reactor vessel, and the apparatus further includes an overflow weir between the primary reservoir and the secondary reservoir. The weir provides fluid communication between the secondary reservoir and the surface of the reaction mixture in the primary reservoir, can be effective in assisting separation of a contaminant that accumulates on the surface of the reaction mixture. Such an embodiment can optionally further include a tertiary reservoir in fluid communication with the secondary reservoir.

In still another embodiment, the secondary reservoir contains reaction mixture defining a surface, and the apparatus further includes a tertiary reservoir in an independent vessel in controllable fluid communication with the secondary reservoir at a point below the surface of the reaction mixture and a source of pressurized steam in controllable fluid communication with the tertiary reservoir.

Another embodiment is an apparatus for carrying out a chemical reaction, the apparatus including a reactor vessel including a gas phase outlet conduit and a primary reservoir containing a condensed phase reaction mixture including a contaminant formed and/or accumulated during the course of a reaction; a secondary reservoir in fluid communication with the primary reservoir; a recycle conduit in fluid communication with the primary reservoir and the secondary reservoir; and a filter in fluid communication with the recycle conduit. The reaction mixture can form a surface regardless of agitation. In such an apparatus, the reaction mixture in the primary reservoir preferably forms a surface, and the secondary reservoir is in fluid communication with the surface of the reaction mixture in the primary reservoir.

Any of the apparatus disclosed above can include one or more filters in fluid communication with reaction mixture, such as in fluid communication with a recycle conduit, to separate a contaminant from reaction mixture. The apparatus can also include one or more of a heat transfer device (*e.g.*, a heat transfer surface), and an agitator (*e*.*g*., disposed in the reaction vessel). Preferably, a heat transfer surface will be at least substantially covered by reaction mixture. Thus, a heat transfer surface will be covered by reaction mixture at least a substantial amount of time that the reaction proceeds, and/or an area of heat transfer surface area will be at least substantially covered by reaction mixture. Use of an agitator can assist in covering a heat transfer surface with reaction mixture.

The apparatus can include independent vessels, both to effect separation and to assist in recycle or other transfer of reaction mixture, as described below. In addition, the apparatus can include, in addition or as an alternative, one or more pumps. For example, a pump can be disposed in fluid communication with the recycle conduit to transfer recycled reaction mixture.

Preferably, an apparatus as described herein will include thermal insulation, such as jacketing on vessels and conduits.

Preferably, the apparatus described herein contains a reaction mixture that includes urea, and the reaction effected includes urea hydrolysis. Optionally, the reaction mixture in the apparatus can include a catalytic agent. The catalytic agent can include one or more of a dissolved catalytic agent and a dispersed solid catalytic agent. In one embodiment, the apparatus includes a reaction mixture that includes a contaminant selected from the group consisting of urea-formaldehyde derivatives from dissolved bulk urea, urea-formaldehyde oligomers, urea-formaldehyde polymers, methylol urea, dimethylol urea, trimethylol urea, urea-formaldehyde pre-condensates, hexamethylenetetramine, saponates, lignosulfonates, and combinations thereof. In one particularly advantageous apparatus, the contaminant is a polyamide.

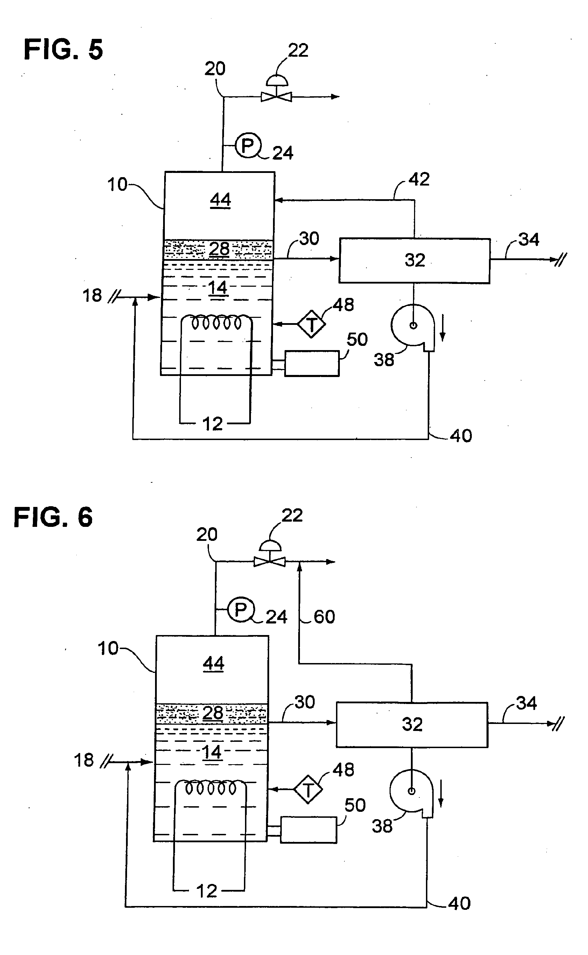

One embodiment of a process and apparatus is illustrated in Figure 5. Various means for separating the insoluble matter may be employed in the invention, including but not limited to such devices as strainers, filters, decanters, coalescing filters, settlers, centrifuges, and other mechanical separators, and combinations of such devices. The selection of the devices will depend upon the characteristics of the contaminant(s) in relation to the aqueous reaction fluid mixture, the flow rate of the side stream being treated, and the total quantity of contaminant(s) present in the stream. It is desired to provide an improved process system capable of continuous or extended maintenance-free operation of the urea hydrolysis system, and requiring only occasional attention by the system operator.

Figure 5 shows a urea hydrolysis reactor 10 with a heater 12 submerged in the liquid phase 14 of the reaction mixture. Aqueous urea 18 is fed to the reactor 10, and a pressurized gas phase stream 20 that includes ammonia, carbon dioxide, and water is drawn off at the top of the reactor 10, controlled by a valve 22 and monitored by a pressure sensor 24. In this embodiment, adapted to remove a contaminant that tends to concentrate at a top layer 28 of the liquid phase 14 of the reaction mixture as shown, at least a portion of the top layer 28 is decanted through a pipe 30 and fed to a separation means 32. The separation means 32 preferably is a physical separation means, for example including one or more of a vessel, a strainer, a filter, a centrifuge, and the like. In this embodiment, a contaminant is discarded through pipe 34, a stream of recovered reactants and/or catalyst is recycled via a pump 38 on a pipe 40 to combine with the aqueous urea feed 18 to the reactor 10, and a gas phase fraction is recycled via a pipe 42 back to the reactor, preferably to a gas phase region 44. Optionally, but preferably, the reactor 10 includes a temperature sensor 48 and a level meter 50.

In a preferred embodiment of a contaminant control means according to the system of Figure 5, which focuses on separation of a contaminant material with distinct physical properties from the aqueous reaction mixture, it may be assumed that a urea hydrolysis reactor is designed to enable the collection of the contaminant at a predictable location in the vessel. Such a design might be an upright cylindrical vessel with volume for the liquid phase and volume for a contained gas phase. Since one contaminant material is found to float upon the aqueous reaction mixture as a distinct phase, effective removal may be effected by skimming off or decanting the contaminated fluid layer in a desirable location, such as from the surface of the liquid phase or in layers formed directly beneath the surface, for example. The skimmed fluids containing the contaminant matter may be forced along a flow path by the pressure of the reactor vessel under its normal operating pressure. The side-stream of skimmed fluid is thus forced through a mechanical separation device, which may be a filtration device which captures the contaminant, or which may separate the contaminant and continuously discharge it as a distinct stream. Examples of the latter type of device include a continuous centrifuge or a decanter. The cleaned reactant mixture is then returned to the reactor by means of a suitable process pump and fluid conduit. The fluid conduit may attach to the reactor vessel or the fluid conduit for the inlet aqueous urea solution or at some other location upstream, so long as the material is recovered and recycled to the reactor. The gaseous outlet from the separation means can be in communication with the reactor vessel, as shown in Figure 5. In an alternative embodiment, shown in Figure 6, the gaseous outlet from the separation means is fed via a pipe 60 to combine with the gaseous product conduit 20, preferably downstream of the valve 22, as shown.

The skimmed material can be diluted using water or, alternatively, with an aqueous urea solution, such as a solution having the same or similar composition as the inlet aqueous urea feed solution. The temperature of the skimmed material may be adjusted upwardly or downwardly to enhance separation of contaminants. For example, by lowering the temperature of the skimmed material, the contaminant mass may solidify, enhancing the performance of solid filtration devices. Conversely, by maintaining the material at a sufficiently high temperature to melt contaminant components, separation of the contaminant liquid from the aqueous solution by decanting is improved. In particular, it has been discovered that at least one component of the contaminant mass melts at a temperature of about 100 °C. Furthermore, it has been discovered that in a temperature range of about 100 °C and higher a contaminant floats in a reaction mixture prepared with phosphoric acid catalyst, thus aiding in separation of the contaminant liquid from the aqueous reaction mixture by decanting. Allowing a tar-like contaminant to freeze when decanting is undesirable, since the solid particles would adhere to surfaces in the decanter and would accumulate, leading to problems sustaining the performance of the decanter. The aqueous urea or dilution water stream can be heated or cooled to effectuate temperature control in the separation operation.

Salts of ammonia increase in solubility as the temperature of a solution increases. Salts of calcium decrease in solubility as the temperature of a solution increases. This difference in solubility can be used to separate accumulating calcium salts by filtering or decanting the skimmed material at higher temperatures, where ammonia salts are soluble and calcium salts are not.

Similarly, if the reactor vessel is segmented or poorly agitated, contaminants may tend to collect at several locations, requiring a plurality of connection points where a side-stream can be drawn off and a skimming action effected to remove the contaminant.

If the vessel is so thoroughly agitated that the insoluble material is dispersed throughout the reaction mixture, then the location of one or more take-off points for the side streams may be determined for convenience, and generally a low point in the vessel is desirable.

In all cases the flow rate of the side stream will be sufficient to turn over the entire contents of the reaction vessel within a certain time. The rate of accumulation of the contaminant is directly proportional to the consumption of the solid urea, which is known to the designer, and the quantity of fluid in the reactor is also known. These parameters enable the designer to set a side stream flow rate that will control the contaminant concentration in the system. Preferably, the removal efficiency should be designed to exceed the contaminant formation and accumulation rate.

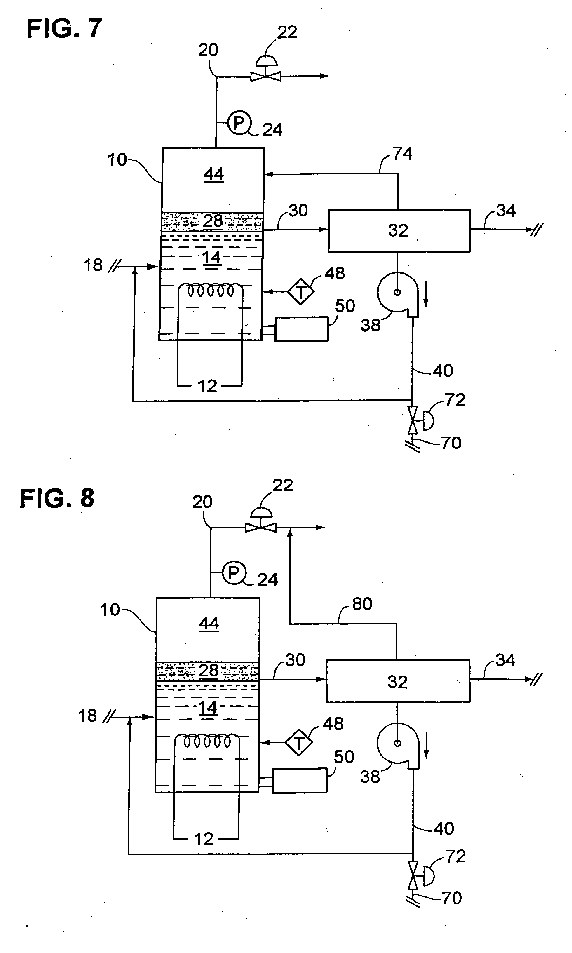

In a second fundamental embodiment of the invention, a portion of the stream removed from the reactor is deliberately discarded and the volume of the discarded fluid is replaced by fresh reaction fluids, as shown in Figure 7, enabling either continuous or intermittent removal of dissolved contaminants as well as removal of the insoluble contaminants, thereby providing means to control the maximum concentration all such contaminants may reach in the hydrolysis reactor. In this instance, the quantity of material to be discarded and the frequency of such discharge may be determined for the convenience of the operation. Generally, intermittent discharge of small quantities would require a certain frequency of such discharge to control the concentration in the reactor to a set maximum level. Larger quantities would require less frequent discharge. In one example of the method, a small portion of the side stream may be continuously discharged as a waste stream to maintain the contaminants at an acceptable equilibrium concentration.

In an example of a preferred embodiment the process illustrated in Figure 7, which provides means to remove insoluble contaminants via the pipe 34 and also dissolved contaminants via a pipe 70, controlled by a valve 72, an apparatus according to the process embodiment of Figure 5 will include provision to discharge a portion of the side stream and to replace this material with fresh fluid reactants from a source of make-up fluid. This accomplishes a "blow down" or step reduction of the contaminants and is the most direct means to control the build up of trace contaminants. The quantity of material removed and replaced is set by the needs of the system and very much depends on the consequences of the contaminant in the system.

As with the embodiments depicted in Figures 5 and 6, the gaseous outlet from the separation means 32 can be in communication with the reactor vessel, as shown in Figure 7 via a pipe 74, or with the gaseous product conduit 20, preferably though a pipe 80 downstream of the valve 22, as shown in Figure 8.

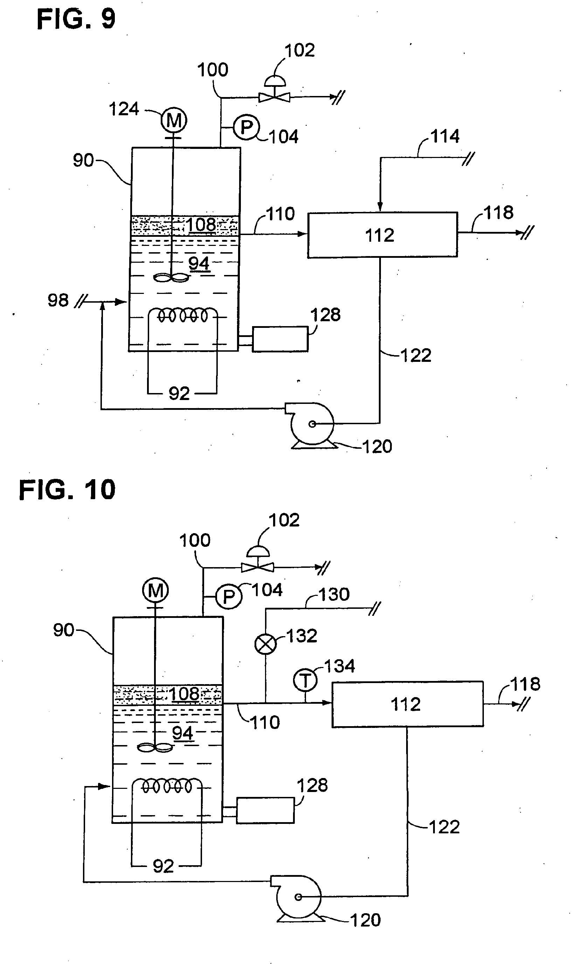

Figure 9 illustrates an embodiment of a system for removing soluble and insoluble contaminant materials from a urea hydrolysis reactor that contains a dissolved or solid dispersed catalyst according to the invention. This method can have all of the features of that previously described in Figure 7, with the addition of apparatus and a process step in which process water is added to the side-stream as part of the treatment step to remove one or more contaminants. When a dissolved or solid dispersed catalyst is present in the process fluid reaction mixture the separation of contaminants may benefit from dilution of the aqueous solution as part of the contaminant removal step. Purified process water is used to make the aqueous urea feed solution, and therefore a portion of the process water may be used as a diluent in the contaminant removal step, provided this quantity of water is measured and accounted for in the process control system. The concentration and the solubility of the dissolved catalyst compounds will determine whether such dilution is beneficial. For example, dilution may be beneficial when a dissolved catalyst might otherwise crystallize and form a solid dispersed phase in the withdrawn liquid reaction mixture if the pressure and/or temperature of the mixture is reduced relative to conditions in the reactor. In addition, it may be beneficial to adjust the temperature of the side stream to enhance removal of contaminants, and such temperature adjustment may also be conducted as part of the processing method according to the invention. After such separation of contaminants has been completed, the balance of the side-stream is recycled to the liquid reaction mixture by means of a recycle pump and fluid conduit.

Thus, Figure 9 shows a urea hydrolysis reactor 90 with a heater 92 submerged in a liquid phase 94 of the reaction mixture. A stream 98 of aqueous urea is fed to the reactor 90, and a pressurized gas phase stream 100 that includes ammonia, carbon dioxide, and water is drawn off at the top of the reactor 90, controlled by a valve 102 and monitored by a pressure sensor 104. In this embodiment, adapted to remove a contaminant that tends to concentrate at a top layer 108 of the liquid phase 94 of the reaction mixture as shown, at least a portion of the top layer 108 is decanted through a pipe 110 and fed to a separation means 112. The separation means 112 preferably is a physical separation means, for example including one or more of a vessel, a strainer, a filter, a centrifuge, and the like. In this embodiment, a liquid such as process water is added to the separation means via a pipe 114, a contaminant is discarded through a pipe 118, and a stream of recovered reactants and catalyst is recycled via a pump 120 on a pipe 122 to combine with the aqueous urea feed 98 to the reactor 90. A gas phase fraction, if present, can be recycled back to the reactor (as in the apparatus of Figs. 5 and 7), combined with the gas phase product from the reactor (as in the apparatus of Figs. 6 and 8), or otherwise disposed of. Optionally, but preferably, the reactor 90 includes a mechanical agitator 124 and a level meter 128.

Figure 10 illustrates an embodiment of a system for removing soluble and insoluble contaminant materials from a urea hydrolysis reactor that contains a dissolved or solid dispersed catalyst according to the invention. This method is a variation on that previously described in connection with Figure 9. As with the method described in connection with Figure 9, it may be beneficial to adjust the temperature of the side stream to enhance removal of contaminants, and such temperature adjustment may also be conducted as part of the processing method of the invention, as shown. The aqueous urea feed is provided via a pipe 130, heated via a heater 132, and monitored via a temperature sensor 134. The urea stream can be combined with the side stream 110 from the urea hydrolysis reactor 90 as part of the treatment step, as shown, or can optionally be provided to the separation means 112. The addition of aqueous urea feed at this point in the process serves to dilute the process fluid reaction mixture with respect to the concentration of a dissolved or solid dispersed catalyst.

Uses for the discharged material should also be considered. The reaction mixture from the hydrolysis reactor will likely contain water, urea, ammonia, polymers, such as a polyamide and/or a urea-formaldehyde derivative, polymerization intermediates and oligomers, both dissolved and suspended, and many minor contaminants introduced with the reactants. The stream should be treated as a hazardous waste stream, and may be chemically treated or combined in a safe manner with other solid wastes, such as the ash from a fuel-fired boiler combustion process.

The removal of such trace contaminant material need only be considered as a feature of the system when such contaminants are present in the feed materials and a significant impact on the process performance is observed within an unacceptably short period of operation. Provided that purified water is employed, the trace contaminants in the urea and those that enter the system from the environment, if any, may not present a serious problem, and may be dealt with effectively by regular cleaning of the reactor, for example on an annual basis.

Fouling of the interior metal surfaces and particularly heat transfer surfaces within the urea hydrolysis reactor by deposits of solids may present a more difficult problem. Means to control such deposits may require more frequent cleaning of the reaction fluid, agitation of the reaction fluid to increase the shear forces at solid surfaces, and controlling the liquid level inside the reactor to insure that heated surfaces are at least substantially submerged in the fluid at all times. Agitation may be accomplished by any suitable means, including but not limited to one or more mechanical agitators, gas injection, and steam injection.

The foregoing detailed description is given for clearness of understanding only, and no unnecessary limitations should be understood therefrom, as modifications within the scope of the invention may be apparent to those skilled in the art.

### EXAMPLES

The following examples are provided to illustrate the invention but are not intended to limit the scope of the invention.

### Example 1

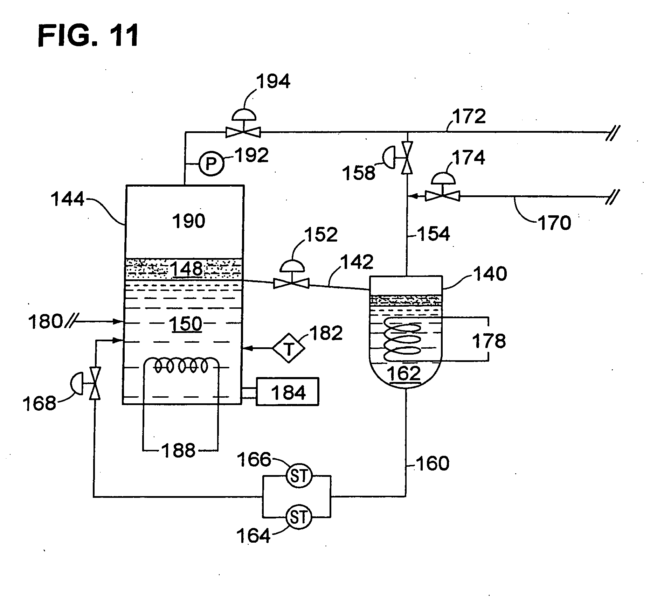

Figure 11 shows another embodiment of apparatus according to the disclosure that employs a decanter vessel and one or more strainers to effect separation of contaminants.

In the system according to Figure 11, a decanter vessel 140 is connected by a sloped pipeline 142 to a reactor 144 at a position advantageous for contaminant removal, *e.g.*, to remove a contaminant that tends to concentrate at a top layer 148 of the liquid phase 150 of the reaction mixture as shown. The connecting pipeline 142 is jacketed for insulation and includes a block valve 152 to open and close the flow path from the reactor 144 to the decanter 140. A second jacketed pipeline 154 is available for discharge of a gas phase from the top of the decanter 140, and the pipeline 154 includes a block valve 158. From the bottom of the decanter vessel 140, a third jacketed pipeline 160 that passes a liquid phase 162 from the decanter 140 through at least one of two parallel strainers (filters) 164 and 166 to the reactor 144. The pipeline 160 includes a block valve 168 before the entrance to the reactor 144. The pipeline 160 and strainers 164 and 166 can optionally include . pressure relief and manual drain valves (not shown).

A steam line 170 supplies pressurized steam (regulated to a pressure in excess of the urea hydrolysis reactor operating pressure). The steam supply line 170 is connected to the decanter vent pipeline 154 between the decanter 140 and the block valve 158 that blocks the path of the gas phase to the reactor product gas line 172. A block valve 174 is provided to open and close the supply of steam into the decanter vessel 140. The supply of steam can also be used to heat the contents of the decanter vessel 140, such as with the heater 178 disposed within the decanter vessel. Preferably, the liquid contents of the decanter 140 are maintained at the same temperature as the solution within the reactor 144.

As with the other described embodiments, urea is fed to the reactor via a pipeline 180, the liquid contents of the reactor 150 are monitored with a temperature sensor 182 and a level sensor 184, and heated via a heater 188, while the gas phase 190 pressure of the reactor 144 is monitored with a sensor 192 and controlled with a valve 194.

This system can have an operating sequence that allows a quantity of the reaction mixture and contaminants to leave the reactor 144 at the conditions of the reactor (temperature and pressure constant) and flow to the decanter vessel 140 until a quantity of liquid is captured in the decanter 140. During this operation, the block valve positions are as follows: valve 152 is open, and valves 158, 168, and 174 are closed. When the filling step is finished, the block valve 152 is closed. To provide a motive force to the liquid captured in the decanter 140, the block valve 174 is opened to allow regulated steam to pressurize the decanter 140 to a pressure in excess of the pressure in the reactor vessel 144. The valve 174 is then closed. To discharge the contents of the decanter, the valve 168 is then opened. The force of the additional pressure provided by the steam pushes the liquid contents out the bottom of the decanter 140, through the pipe 160 and the filter 164 or 166, and finally back into the reactor vessel 144. The valve 168 is then closed, and the valve 152 can be opened to repeat the cycle. The valve 158 can be used to vent the decanter 140 when it is isolated from the reactor 144, for example in connection with cleaning the decanter 140.

In an alternative operating sequence to fill the decanter 140, the valve 158 is opened first, and then the valve 152 is opened. However, depending on the pressure drop in the pipes between the various connections, this configuration can create a large differential pressure along the path to the decanter 140 and then to the product gas discharge pipeline 172. In such a situation, the flow of liquid to the decanter 140 could be quite violent, leading to potential loss of liquid phase reactant to the product gas line 172, and the reactor 144 pressure could be disadvantageously affected.

### Example 2

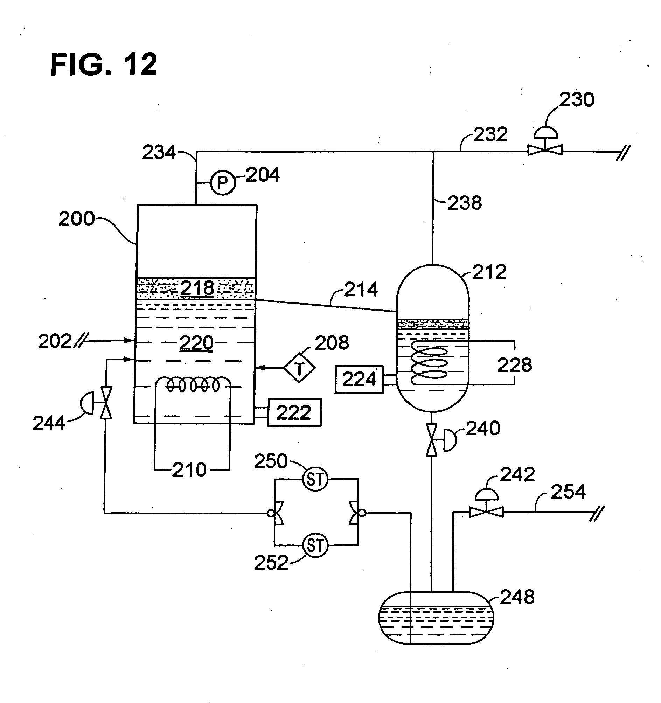

Figure 12 shows another embodiment of apparatus according to the disclosure that employs primary and secondary reactors, a transfer vessel, and one or more strainers to effect separation of contaminants.

In this system, urea is added to the primary reactor vessel 200 via a pipeline 202 operated at a pressure and temperature advantageous for urea hydrolysis. The pressure is monitored by a sensor 204 and the temperature is measured by a sensor 208 and controlled via a heater 210. A second vessel which can be described as a secondary reactor vessel 212 is provided and connected by a sloped pipeline 214 such that it will receive an overflow stream of reactant solution, *e.g.*, to remove a contaminant that tends to concentrate at a top layer 218 of the liquid phase 220 of the reaction mixture as shown.

The secondary reactor vessel 212 is advantageously sized to contain a quantity of reaction solution equivalent to the maximum expected displacement of liquid caused by the evolution of product gases. For example, the rate of production of ammonia, in one type of urea hydrolysis reaction control scheme, is dependent upon the volume of reaction mixture; in an apparatus according to this example controlled in such a manner, the secondary reactor vessel 212 will be sized to accommodate a quantity of urea reaction solution equivalent to the maximum expected displacement of liquid when the system is operated at full capacity.

Furthermore, it is preferred to maintain the liquid level in the secondary reactor vessel 212 below the liquid level in the primary reactor 200 (*e.g.*, by selecting a suitable take-off point), to ensure that contaminant matter that floats on the surface of the reaction mixture will be trapped in the secondary reactor vessel 212 and effectively removed and isolated from the primary reactor. Accordingly, the primary reactor 200 includes a level sensor 222 and the secondary reactor 212 includes a level sensor 224.

Preferably, the majority of the urea hydrolysis reaction will occur in the primary reactor 200, and a relatively smaller amount of ammonia will be produced in the secondary reactor 212. The contents of the secondary reactor 212 preferably are maintained at the same temperature as the contents of the primary reactor 200, for example by use of a heater 228, as shown. The contents of both reactors 200 and 212 preferably are maintained at substantially the same pressure by use of a valve 230 in a combined product gas pipeline 232 that is in fluid communication with a product gas pipeline 234 from the primary reactor 200 and a product gas pipeline 238 from the secondary reactor 212.

Contaminant removal is effected in at least two ways in the system shown in Figure 12. First, a separation of one or more floating contaminants can occur by trapping the floating material in the secondary reactor 212 as described above.

In addition, a contaminant that is suspended in the reaction solution can be filtered out as the solution is recycled back to the primary reactor 200. This is performed using block valves 240, 242, and 244, a transfer vessel 248, and strainers 250 and 252. A preferred operating cycle for recycle begins by opening a valve 240 (valves 240, 242, and 244 are usually closed), which enables the solution in the secondary reactor 212 to flow in to the transfer vessel 248, for example to fill the transfer vessel 248. The valve 240 is then closed, and the valve 242 is opened to allow a regulated supply of steam to flow through a pipe 254 to pressurize the transfer vessel 248 to a pressure selected to be in excess of the operating pressure of the primary reactor 200. Subsequently, the valve 244 is opened, and the liquid in the transfer vessel 248 is forced out of the vessel 248, through the filter 250 or 252, and back into the primary reactor vessel 200, where it displaces an equal volume of liquid into the secondary reactor vessel 212. The sequence is completed by closing the valves 242 and 244, which restores the system to the initial conditions. In the alternative, a fluid pump (not shown), heated and capable of operating at the temperature and pressure of the reactors, could also be used to recycle liquid from the secondary reactor 212 and/or the transfer vessel 248 through a strainer 250 or 252 and back to the primary reactor 200.

In the system described above in connection with Figure 12, it is possible to maintain a substantially constant liquid level in the primary reactor vessel 200, which provides certain advantages. For example, the liquid-gas interface in the primary reactor is maintained at a substantially fixed distance from the product gas discharge nozzle, which helps to limit the amount of liquid reaction mixture that might be discharged as entrained droplets in the product gas stream.

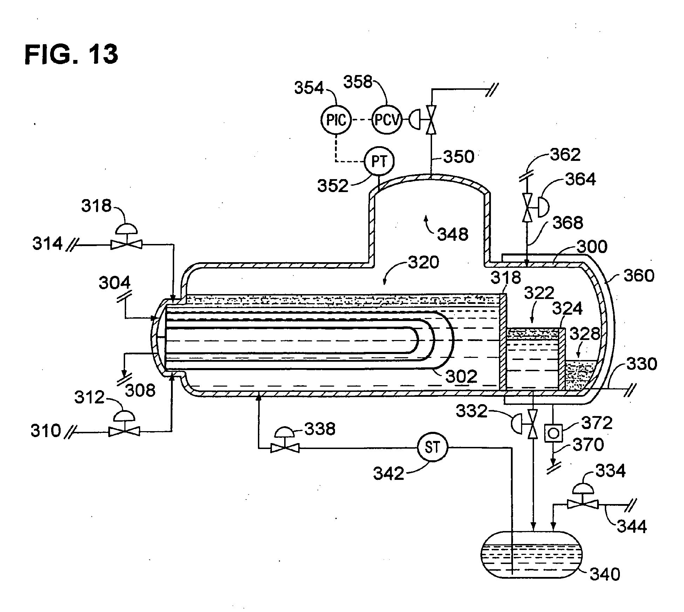

Figure 13 illustrates a urea hydrolysis system using a reboiler style reactor vessel 300. This design allows an internal heating coil 302 to be arranged horizontally, for ease of servicing. The heating coil 302 is shown in Figure 13 with a steam inlet 304 and a condensate outlet 308. In addition, the reactor itself can be located on a ground floor, which can reduce material and labor costs associated with installation and servicing. In the system as shown, molten urea is fed via a pipeline 310 and controlled with a valve 312, and a separate feed of steam is fed via a pipeline 314 and controlled with a valve 318. The operation and control of molten urea hydrolysis systems are described in more detail in commonly-assigned U.S. Patent Application Serial No. 09/951,287 filed September 12,2001.

In the reactor 300, an internal weir such as a plate 318 is provided to contain a volume of reaction mixture in a primary reaction zone 320. This primary reaction zone 320 operates essentially like the primary reactor 200 in the two-reactor system described above in connection with Figure 12. The weir plate 318 serves an equivalent function to the sloped pipeline 214. Contaminant matter that tends to accumulate on the surface of the reaction mixture overflows the weir 318 and is trapped in a secondary reaction zone 322 to effect a first separation step. The overflow process is likely to include some volume of reaction mixture. The secondary reaction zone is operated at a lower liquid level with respect to the liquid level of the primary reaction zone 320.

A second weir, such as a plate 324 can be provided to effect another separation step to trap floating contaminant matter in a zone 328, which can be removed, continuously or intermittently, through a nozzle (not shown) and through a pipeline 330.

A recycle and filtration loop, including block valves 332, 334, and 338, a transfer vessel 340, a strainer 342, and a steam pipeline 344, is also shown. This recycle and filtration loop can be operated in the same manner as described above in connection with the description of similar elements 240, 242, 244, 248, 250/252, and 254.

The reboiler vessel 300 is designed with a headspace 348 to facilitate vapor/liquid separation before the vapor phase exits through a pipeline 350. The pressure in the vessel 300 is monitored with a pressure sensor/transducer 352, which provides a signal to a pressure controller 354, which in turn provides a signal to control a valve 358 on the pipeline 350.

The end of the vessel 300 that includes zones 322 and 328 is fitted with a heating jacket 360 supplied with a source of steam 362 regulated by a valve 364 in pipe 368. The steam exits through pipe 370 equipped with a trap 372. Alternatively, another heat transfer fluid could be used in the heating jacket, or an electric-powered heating mantle can be used. In another embodiment (not shown), a heating coil such as coil 302 can be provided and inserted from the distal end of the vessel 300 and into the chamber defined by baffle 318 and the dished head of the vessel 300 at the distal end.

The foregoing description is given for clearness of understanding only, and no unnecessary limitations should be understood therefrom, as modifications within the scope of the invention may be apparent to those having ordinary skill in the art.

## Claims

1. An apparatus for carrying out a chemical reaction, said apparatus comprising:
(a) a reactor vessel comprising a gas phase outlet conduit and a primary reservoir containing a condensed phase reaction mixture such that said reaction mixture defines a surface, said reaction mixture comprising a contaminant formed and/or accumulated during the course of a reaction;
(b) a secondary reservoir in fluid communication with said surface of said reaction mixture in said primary reservoir; and
(c) a recycle conduit in fluid communication with said primary reservoir and said secondary reservoir.

2. The apparatus of claim 1, wherein said secondary reservoir comprises an independent vessel disposed outside said reactor vessel and further comprising a conduit, a first opening of said conduit disposed in fluid communication with said primary reservoir and a second opening of said conduit disposed in fluid communication with said secondary reservoir.

3. The apparatus of claim 2, wherein said first opening of said conduit is disposed at an area comprising at least a portion of said surface of said reaction mixture in said primary reservoir.

4. The apparatus of claim 2, wherein said secondary reservoir is in controllable fluid communication with said primary reservoir and further comprising a source of pressurized steam in controllable fluid communication with said secondary reservoir.

5. The apparatus of claim 2, wherein said independent vessel further comprises a gas phase outlet conduit in fluid communication with one or more of said reactor vessel and said reactor vessel gas phase outlet conduit.

6. The apparatus of claim 2, wherein said independent vessel further comprises a second inlet conduit in controllable fluid communication with a source of one or more reactants.

7. The apparatus of claim 1, wherein said secondary reservoir is disposed within said reactor vessel, and further comprising an overflow weir between said primary reservoir and said secondary reservoir.

8. The apparatus of claim 7, further comprising a tertiary reservoir in fluid communication with said secondary reservoir.

9. The apparatus of claim 1, wherein said secondary reservoir contains reaction mixture defining a surface, and further comprising a tertiary reservoir comprising an independent vessel in controllable fluid communication with said secondary reservoir at a point below said surface of said reaction mixture, and further comprising a source of pressurized steam in controllable fluid communication with said tertiary reservoir.

10. The apparatus of claim 1, wherein said secondary reservoir is in fluid communication with said primary reservoir in an area comprising at least a portion of said surface of said reaction mixture in said primary reservoir.

11. The apparatus of claim 1, further comprising a filter in fluid communication with said recycle conduit to separate a contaminant from recycled reaction mixture.

12. The apparatus of claim 1, further comprising a pump in fluid communication with said recycle conduit to transfer recycled reaction mixture.

13. The apparatus of claim 1, further comprising an agitator disposed in said reaction vessel.

14. The apparatus of claim 1, further comprising a heat transfer surface, wherein said heat transfer surface is at least substantially covered by said reaction mixture.

15. The apparatus of claim 1, wherein said reaction mixture comprises urea and said reaction comprises urea hydrolysis.

16. The apparatus of claim 1, wherein said reaction mixture comprises a catalytic agent.

17. The apparatus of claim 16, wherein said catalytic agent comprises a dissolved catalytic agent.

18. The apparatus of claim 16, wherein said catalytic agent comprises a dispersed solid catalytic agent.

19. The apparatus of claim 1, wherein said contaminant is selected from the group consisting of urea-formaldehyde derivatives from dissolved bulk urea, urea-formaldehyde oligomers, urea-formaldehyde polymers, methylol urea, dimethylol urea, trimethylol urea, urea-formaldehyde pre-condensates, hexamethylenetetramine, saponates, lignosulfonates, and combinations thereof.

20. The apparatus of claim 19, wherein said contaminant is a polyamide.

21. An apparatus for carrying out a chemical reaction, said apparatus comprising:
(a) a reactor vessel comprising a gas phase outlet conduit and a primary reservoir containing a condensed phase reaction mixture comprising a contaminant formed and/or accumulated during the course of a reaction;
(b) a secondary reservoir in fluid communication with said primary reservoir;
(c) a recycle conduit in fluid communication with said primary reservoir and said secondary reservoir; and
(d) a filter in fluid communication with said recycle conduit.

22. The apparatus of claim 21, wherein said reaction mixture in said primary reservoir forms a surface and said secondary reservoir is in fluid communication with said surface of said reaction mixture in said primary reservoir.

23. An apparatus for carrying out a chemical reaction, said apparatus comprising:
(a) a reactor vessel containing a condensed phase reaction mixture such that said reaction mixture defines a surface within said reactor vessel, said reaction mixture comprising a contaminant formed and/or accumulated during the course of a reaction;
(b) means for separating a portion of said reaction mixture comprising said contaminant from a bulk portion of said reaction mixture;
(c) means for separating a contaminant from a reactant-rich portion of said separated reaction mixture; and
(d) means for recycling at least a portion of the reactant-rich portion of said separated reaction mixture to said reactor vessel.
